# EUROPEAN PATENT APPLICATION

(11) **EP 2 104 174 A1**
(43) Date of publication of application: **23.09.2009**
(21) Application number: 07831572.8
(22) Date of filing: 09.11.2007
(51) Int. Cl.: H01M 10/36, H01M 4/48, H01M 4/60

(54) **LITHIUM-ION SECONDARY BATTERY**

(30) Priority: 10.11.2006 JP 2006306019
(71) Applicant: Fuji Jukogyo Kabushiki Kaisha, Tokyo 160-8316 (JP)
(72) Inventor: SHIOZAKI, Ryuji, Shinjuku-ku Tokyo 160-8316 (JP); IWATA, Asao, Shinjuku-ku Tokyo 160-8316 (JP); KANEKO, Satoko, Shinjuku-ku Tokyo 160-8316 (JP); ANDO, Nobuo, Shinjuku-ku Tokyo 160-8316 (JP); TANIGUCHI, Masahiko, Shinjuku-ku Tokyo 160-8316 (JP)
(74) Representative: Meissner, Bolte & Partner
(86) International application number: PCT/JP2007/071841
(87) International publication number: WO 2008/056791

(57) **Abstract**

It has been found that when the potentials of the positive electrode and the negative electrode of the lithium ion secondary battery after the electrodes have been short-circuited are each within a predetermined range, the battery produces high energy density. That is the present invention provides a lithium ion secondary battery having a positive electrode, a negative electrode and an electrolyte containing a lithium salt and an aprotic organic in which a positive electrode active material is a material allowing lithium ions and/or anions to be reversibly doped thereinto, and a negative electrode active material is a material allowing lithium ions to be reversibly doped thereinto, and the potentials of the positive electrode and the negative electrode after the positive electrode and the negative electrode have been short-circuited are each selected to be within a range from 0.5 V to 2.0 V.

## Description

### BACKGROUND OF THE INVENTION

### 1. Field of the Invention

The present invention relates to a battery technology and more particularly to a technology which is effective to a nonaqueous lithium secondary battery.

### 2, Description of the Related Art

Recently, a so-called lithium ion secondary battery, which uses a carbon material, e.g., graphite, for a negative electrode and a lithium-containing metal oxide, e.g., LiCoO₂, for a positive electrode, has been put into markets. The lithium ion secondary battery has advantages of high voltage and high capacity when compared to other secondary batteries. With these advantages, the lithium ion secondary battery has attracted attentions as an electric storage device and has been used as main power sources for notebook personal computers and mobile phones.

The lithium ion secondary battery is a rocking-chair type battery in which after the battery is assembled, the lithium containing metal oxide of the positive electrode supplies lithium ions to the negative electrode by charging the battery, and when it is discharged, the lithium ions are returned from the negative electrode to the positive electrode.

When the coulombic efficiency of the positive electrode material of the lithium ion secondary battery is compared with that of the negative electrode during the charging and discharging operations, the coulombic efficiency of the positive electrode material is higher than that of the negative electrode material. The initial capacity of the lithium ion secondary battery after assembled is expressed as the product of the charging amount and the coulombic efficiency of the negative electrode, that is, the initial capacity of the battery is determined by the coulombic efficiency of the negative electrode.

Therefore, even if with the intention of increasing the energy density of the lithium ion secondary battery, a negative electrode material, e.g., Sn oxide, having a large discharge capacity per unit weight, is used, the discharge capacity of the battery is low when the coulombic efficiency is low. In a conventional lithium ion secondary battery, the coulombic efficiency of the negative electrode is low. Accordingly, the potential energy stored in the positive electrode material filled in the battery is not completely utilized.

In a lithium ion secondary battery, a group of oxide compounds, typically LiCoO₂, LiNiO₂, and LiMn₂O₄ or a group of olivine compounds, typically LiFePO₄ are widely used for the positive electrode material. Since the positive electrode material contains lithium ions therein, merely combinations of the positive electrode and the negative electrode can operate as a secondary battery.

In the case of the lithium-containing metal oxides, in the oxidation-reduction reaction of them, the amount of the utilized lithium ions per one mole of the lithium-containing metal oxide is below 1 mol. Therefore it is impossible to expect that those oxides will provide high discharge capacity.

A vanadium oxide allows several moles of lithium ions to be doped thereinto and de-doped therefrom with respect to one mole of the vanadium oxide. With this property, the vanadium oxide is a strong candidate for the positive electrode material for the lithium ion secondary battery of large capacity. Japanese Patent Nos. 3 108 186 and 3 115 448 disclose technologies which uses xerogel formed by gelling of vanadium pentoxide (V₂O₅) for the positive electrode active material. In those patents, the active material in a gel state in which the crystals have sufficiently been grown is used, and the thin film electrode is formed by forming the active material directly on the current collector. Those facts make the electron conductivity low and provide insufficient characteristic exhibition.

In the technologies of Japanese Patent Nos. 3 108 186 and 3 115 448, the battery is constructed to be of the solid polyelectrolyte type which uses metal lithium, thereby to avoid the short-circuiting caused by precipitation of dendrite lithium. Even if the solid polyelectrolyte is used, it is difficult to suppress the precipitation of the dendrite after a long period cycle. Accordingly, it is difficult to use the battery of the solid polyelectrolyte type disclosed in the Japanese Patents as a large capacity power source.

Japanese published examined application JP-B-05-080 791 discloses a secondary battery using a carbon negative electrode and a liquid electrolyte. In manufacturing the battery, the positive electrode and a lithium electrode are combined to pre-dope lithium ions into the positive electrode and then the lithium electrode is changed to the carbon negative electrode. Journal of Power Sources 54 (1995) 146-150 describes a technology on the charging and discharging in a similar battery system which operates in a state that the positive electrode operation potential is at 2.5 V or higher.

Japanese published unexamined application JP-A-05-198 300 discloses a battery system in which lithium ions are supplemented in advance by chemically synthesizing LiV₂O₅ by subjecting V₂O₅ and a lithium salt to the heat treatment.

However, the lithium ion secondary batteries described above involve the following problems.

In the technology of JP-B-05-080 791, the lithium ion supply source is only the positive electrode, and the charge/discharge efficiency of the negative electrode hinders sufficient discharge energy from being pulled out of the battery system. Additionally, the lithium ion doping step and the electrode changing step are essential, and this impairs the productivity in actual battery production.

In the case of Journal of Power Sources 54 (1995) 146-150, when the battery is operated at 2.5 V or higher, the utilization efficiency of the positive electrode is low and in this respect it is difficult to produce high energy density.

In the case of the technology of JP-A-05-198 300, lithium ions are chemically supplemented in advance by subjecting V₂O₅ and a lithium salt to the heat treatment. In this method, the amount of the supplemented lithium ions through the reaction with V₂O₅ in heat treatment is limited, so that this technology fails to make the battery generate high discharge energy.

### SUMMARY OF THE INVENTION

Accordingly, an object of the present invention is to provide a lithium ion secondary battery which can be easily manufactured and has a high energy density.

Above described and further objects, and novel features of the present invention will be apparent when carefully reading the detailed description in connection with the accompanying drawings.

The present invention may be summarized as follows:

Many efforts were made to solve the above problems and it was found that when the potentials of the positive electrode and the negative electrode of the lithium ion secondary battery are each within a predetermined range of operation potentials, the battery produces high energy density.

In a lithium ion secondary battery having a positive electrode, a negative electrode and an electrolyte containing a lithium salt and an aprotic organic solvent in which a positive electrode active material is a material allowing lithium ions and/or anions to be reversibly doped thereinto, and a negative electrode active material is a material allowing lithium ions to be reversibly doped thereinto, the potentials of the positive electrode and the negative electrode after the positive electrode and the negative electrode have been short-circuited are each selected to be within a range from 0.5 V to 2.0 V based on metal lithium (vs. Li/Li⁺).

The useful effects produced by the present invention are briefly described below.

The operation potentials of the positive electrode and the negative electrode of the nonaqueous lithium ion secondary battery are each selected to be within a range from 0.5 V to 2.0 V to provide the lithium ion secondary battery having high energy density. When the vanadium oxide defined in claim 2 is used for the positive electrode, the lithium ion secondary battery, which has a high energy density per weight of the battery exceeding 200 Wh/kg, is provided.

### BRIEF DESCRIPTION OF THE DRAWINGS

- FIG. 1: is a graph showing variations of operation potentials of a lithium ion secondary battery according to the present invention;
- FIG. 2: is a diagram showing layered crystal structures having a short layer length in an amorphous gel, which is used in the present invention;
- FIG. 3: is a diagram showing a layered crystal structure having a long layer length in an amorphous gel, which is different from that used in the present invention;
- FIG. 4: is a graph showing an X-ray diffraction pattern of an active material used for the positive electrode used in the preset invention;
- FIG. 5: is a flow chart showing a method for manufacturing an electrode active material used in the present invention;
- FIG. 6: is a flow chart showing another method for manufacturing an active material used for the positive electrode in the present invention;
- FIG. 7: is a transmission electron microscope (TEM) photograph showing a positive electrode active material used in the present invention;
- FIG. 8: is a cross sectional view showing a lamination type lithium ion secondary battery according to the present invention;
- FIG. 9: is a longitudinal cross sectional view showing an inner structure of a wound type lithium ion secondary battery according to the present invention;
- FIG. 10: is a view showing a folding type lithium ion secondary battery according to the present invention;
- FIG. 11: is a transmission electron microscope (TEM) photograph showing a positive electrode active material used in the present invention; and
- FIG. 12: is a table comparatively showing the battery capacity and the weight energy density of examples of the present invention and comparative examples.

### DESCRIPTION OF THE PREFERRED EMBODIMENTS

The preferred embodiments of the present invention will be described with reference to the accompanying drawings.

The present invention relates to a lithium ion secondary battery. As described above, the inventors found the fact that when the potentials of the positive electrode and the negative electrode of the lithium ion secondary battery are each within a predetermined range of operation potentials, the battery produces high energy density.

A lithium ion secondary battery of the present invention has a positive electrode, a negative electrode and an electrolyte containing a lithium salt and an aprotic organic solvent. The positive electrode active material is a metal oxide or an organic compound, which exhibit redox activity, and the negative electrode active material allows lithium ions to be reversibly doped thereinto. The potentials of the positive electrode and the negative electrode, after the positive electrode and the negative electrode have been short-circuited, are each selected to be within a range from 0.5 V to 2.0 V with respect to metal lithium (vs. Li/Li⁺), which allows the battery to produce high battery energy.

Examples of the organic compound exhibiting redox activity are acetylene, aniline, tetrathionaphthalene, thiophene derivative, and its polymer.

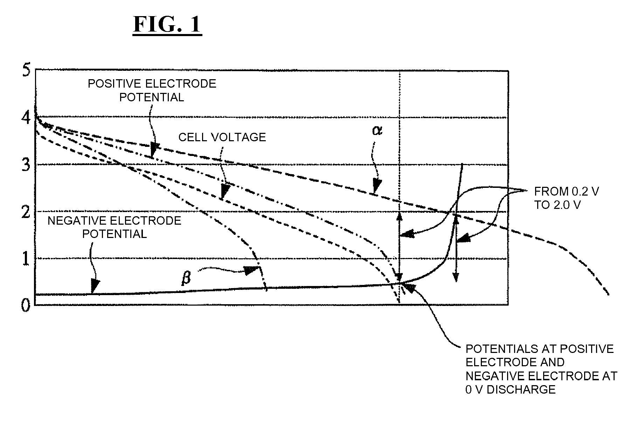

FIG. 1 shows potential profiles of the lithium ion secondary battery. As shown in FIG. 1, in the lithium ion secondary battery, an actual cell voltage is represented by a cell voltage curve, which is a difference between a curve representing a variation of a positive electrode potential and a curve representing a variation of a negative electrode potential. That is, (cell voltage) = (positive electrode potential) - (negative electrode potential).

A potential at a point where a curve representing a variation of the positive electrode potential intersects a curve representing a variation of the negative electrode potential, is the potential of the positive electrode and the negative electrode at 0 V discharge after short-circuiting both electrodes. One of the characteristic features of the present invention is that the potentials of the positive electrode and the negative electrode at 0 V discharged are each selected to be within a range from 0.5 V to 2.0 V based on the metal lithium ion (vs. Li/Li⁺) reference. In the Figure, the potential ranges are indicated by arrowhead lines.

As shown in FIG. 1, when a curve α indicates a positive electrode potential, the cell capacity is large but the utilization capacity of the positive electrode is small and hence, the energy density is small. When a curve β indicates a positive electrode potential, the utilization capacity of the positive electrode is sufficiently large but the negative electrode potential is lower than 0.5 V. In this state, the capacity of the negative electrode cannot be sufficiently utilized and the energy density is small. In consideration of those facts, in the present invention, the range of 0.5 V to 2.0 V is selected as the potential range within which the capacities of the positive electrode and the negative electrode are sufficiently utilized.

In the lithium ion secondary battery, it is preferable to use an electrode material containing layered crystalline material which has fine crystal particles having a layer length of 30 nm or shorter, exclusive of 0 nm, for the positive electrode active material. Soft carbon material, graphite or a mixture of soft carbon and graphite is preferably used for the negative electrode material.

The lithium ion secondary battery may be constructed such that the positive electrode and the negative electrode are alternately laminated in a state that a separator is interposed between the electrodes, and the resultant lamination is wound or folded, or at least three layers in total of the positive electrode and the negative electrode are laminated.

In the lithium ion secondary battery thus constructed, through holes are formed passing through from the front side to the back side of the positive electrode current collector and the negative electrode current collector. The negative electrode and/or the positive electrode are pre-doped with lithium ions by its electrochemical contact with metal lithium.

In the specification, the term "dope" involves "occlude", "support", "adsorb" or "insert", and specifically a phenomenon where lithium ions or anions enter the positive electrode active material or lithium ions enter the negative electrode active material. The term "de-dope" involves "release" or "desorption", and specifically means a phenomenon where lithium ions or anions desorb from the positive electrode active material or lithium ions desorb from the negative electrode material.

"Dope" of anions means "to dope anions of the supporting salt contained in the electrolyte when conductive polymer, e.g., polyacetylene or polyaniline, is used for the positive electrode." Specific examples to be doped are CF₃SO₃⁻, C₄F₉SO₈⁻, (CF₃SO₂)₂N⁻, (CF₃SO₂)₃C⁻, BF₄⁻, PF₆⁻, and CLO₄⁻.

The lithium ion secondary battery of the present invention will be described in more detail. In the lithium ion secondary battery, a group of oxide compounds, typically LiCoO₂, LiNiO₂, and LiMn₂O₄ or a group of olivine compounds, typically LiFePO₄ can be used for the positive electrode material used in the present invention, which have been used in conventional lithium ion secondary batteries. Vanadium oxide of the layered crystalline material, particularly vanadium pentoxide is preferably used.

The layered crystalline material in the present invention is such that in a microscopic observation where the material is observed in order of nanometers (nm) or less, only the crystal structure having a layer length of 30 nm or shorter is present or the crystal structure having a layer length of 30 nm or shorter and the amorphous structure are both present, and that in a macroscopic observation of the material in order of micrometers (µm), larger than nanometers (nm), a macroscopic amorphous structure where the crystal structures are randomly arranged is observed.

Vanadium pentoxide is macroscopically amorphized to reduce the layer length of the layered crystalline material (to make it fine). For example, the layered crystal state having the long layer length is divided into a layered crystal state having the short layer length.

The layered crystal state having a short layer length is a novel structure that cannot be obtained when the material has been amorphized. By stopping the process of the material amorphizing in progress, the layered crystal state having the short layer length is allowed to be present in the material.

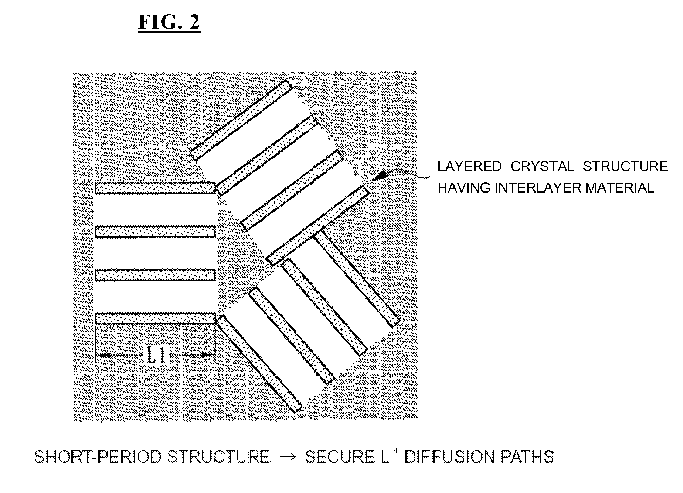

A pattern of layered crystal state, according to the present invention, having the short layer length L1, that is, a macroscopic amorphous state is illustrated in model form in FIG. 2. In the macroscopic amorphous state, a so-called short-period structure of which the layer length L1 is repeated in averagely short period forms a layered crystal structure. In the layered crystalline material being in the macroscopic amorphous state, according to the present invention, a plurality of the layered crystals having the short-period structure are aggregated.

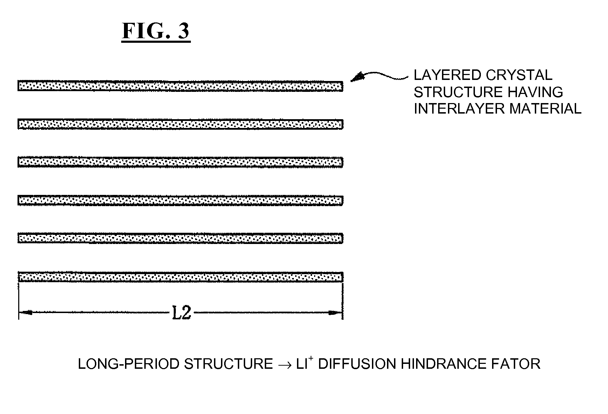

In a conventional case, the layered crystal state, which is a so-called long-period structure of which the layer length L2 is repeated in averagely long period, is obtained as shown in FIG. 3.

When the layered crystalline material having the layered crystal state of the short layer length is used as the positive electrode active material of the battery, chemical species such as ions which come into play in battery reaction easily intercalate into and deintercalate from between the layers of the layered crystals. The ions having been doped into between the layers are easy to diffuse since the layer length is short and the diffusion path is short. The charge/discharge characteristic or the cycle durability is superior to the case of the layered crystals having the long period structure in which the intercalation and the deintercalation of the ions are not smooth.

In the layered crystalline material described above, the layer length is important. The layer length affects the length of a path of ions intercalating in and deintercalating from between the layers directly. No problem arises if a factor other than the layer length, for example, a thickness of the layer in the layered crystal structure, decreases with decrease of the average crystal particle size. What is essential is that the size of the average crystal particles having the layered crystal structure is small, and the ions easily intercalate in and deintercalate from between the layers.

The layered crystals of the short layer length is preferably formed in a manner that vanadium oxide as a raw material is dissolved in hydrogen peroxide (H₂O₂) or alkali salt and the resultant solution is solidified.

When hydrogen peroxide (H₂O₂) is used, the vanadium oxide solution exhibits acidic property. When the alkali salt is used, the vanadium oxide solution exhibits alkaline property.

When lithium ions are used for a cation source of the alkali salt, lithium ions can be doped into the vanadium oxide in the synthesizing stage.

The vanadium oxide, which is macroscopically in the amorphous state, is preferably formed from either of the solutions when the solvent is removed from the solution.

Examples of lithium ion source include water-soluble lithium sulfide, lithium hydroxide, lithium selenide and lithium telluride. At least one kind of lithium compound, which is selected from the examples of lithium compounds, can be used as a water-soluble lithium source.

In synthesizing the vanadium oxide, a monomer of a sulfur-containing organic conductive polymer can be mixed into the active material. In the final stage of forming the positive electrode active material, it is desirable to remove the monomer of the sulfur-containing organic conductive polymer. It is estimated that the sulfur-containing organic conductive polymer comes into play in sustaining the oxide composition in the synthesizing reaction of the vanadium oxide, although its exact and detailed mechanism is not known. However, it is considered that the performance of the sulfur-containing organic conductive polymer as an active material is low.

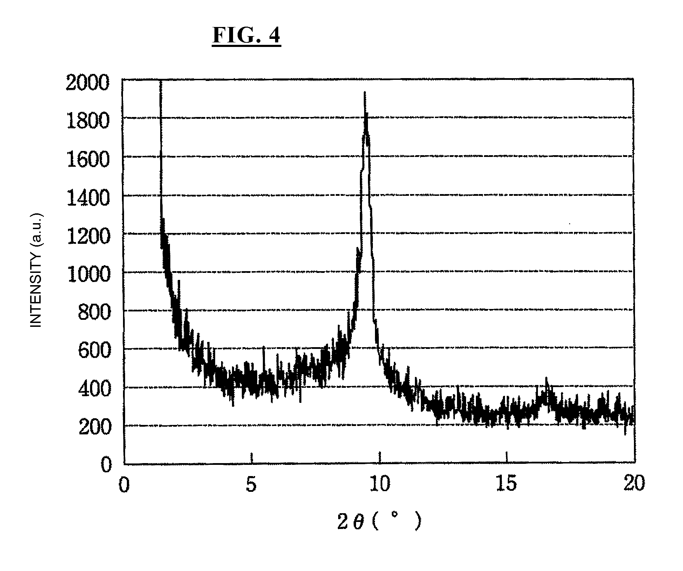

An X-ray diffraction pattern of the metal oxide contained in the active material of the positive electrode material for the nonaqueous lithium ion secondary battery is as shown in FIG. 4, and the metal oxide has a peak only within a diffraction angle 2θ = 5° to 15°.

The active material thus prepared is mixed with binder, e.g., polyvinylidene fluoride (PDVF), and preferably conductive particle, and the resultant mixture is used as a material of the positive electrode. The mixture is coated over a conductive substrate (current collector) to form the positive electrode. A layer thickness of the positive electrode material for the nonaqueous lithium ion secondary battery is selected to be within 10 to 200 µm, for example.

Examples of the conductive particle include a conductive carbon (conductive carbon, e.g., Ketjen Black, or the like), a metal such as copper, iron, silver, nickel, palladium, gold, platinum, indium, and tungsten, and a conductive metal oxide such as indium oxide, and tin oxide. It suffices that the amount of such conductive particles contained is 1 to 30 % of the weight of the metal oxide.

A conductive substrate having a conductivity at least on its surface contacting the positive electrode material can be used for the substrate (current collector) supporting the positive electrode material. Such a substrate can be made of a conductive material such as metal, conductive metal oxide or conductive carbon. Particularly copper, gold, aluminum or an alloy of them or conductive carbon are preferably used for the substrate. In a case where the substrate is made of a non-conductive material, the substrate is needed to be coated with a conductive material.

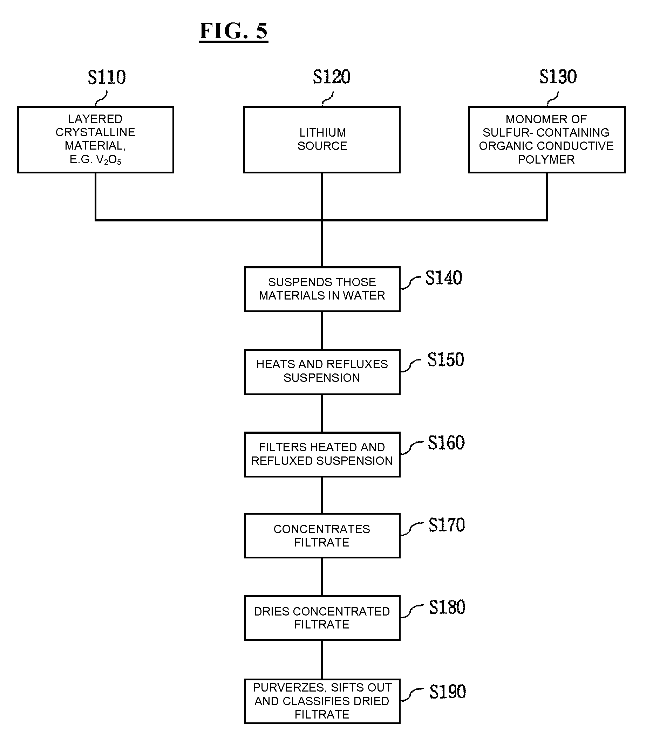

The layered crystalline material having the short layer length, which is useful for the positive electrode material of the nonaqueous lithium ion secondary battery, is manufactured in a manufacturing step as flow charted in FIG. 5.

As shown in FIG. 5, in step S110, vanadium pentoxide, for example, is prepared for the layered crystalline material. In step S120 a water-soluble lithium ion source is prepared and in step S130 a monomer of a sulfur-containing organic conductive polymer is prepared.

The vanadium pentoxide, the water-soluble lithium ion source, and the monomer of the sulfur-containing organic conductive polymer, which were prepared in steps S110, S120 and S130, are suspended in water in step 140. An amorphizing process starts by the suspension. The water-soluble lithium ion source can be lithium sulfide or lithium hydroxide, for example. The monomer of the sulfur-containing organic conductive polymer can be 3,4-ethylene dioxythiophene, for example.

The suspension is heated under reflux for a predetermined time in step S150. Following the heating under reflux of the suspension in step S150, the solid content is filtered out from the heated and refluxed suspension in step S160. The filtrate from which the solid content has been removed is concentrated in step S 170. After concentration, the filtrate is dried by vacuum drying process, for example, in step S 180.

The resultant is pulverized into powder having predetermined particle sizes by a ball mill, for example, and the particles are sifted out and classified in step S190. In this way, the powder of the vanadium pentoxide having the layered crystal structure of the short layer length is obtained. The layered crystal structure powder is used for the active material of the positive electrode.

In the heating treatment in each of steps S150 and S180, the heating temperature must be set at lower than 250°C. It is not preferable that the temperature exceeds 250 °C, since the layered crystal having the short layer length changes in its state.

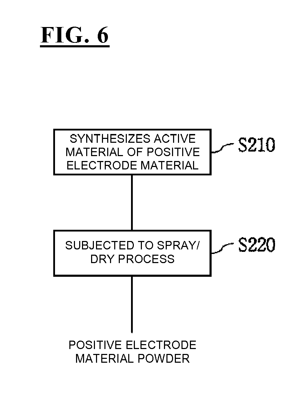

The layered crystalline material having the short layer length can also be manufactured by a manufacturing step flow charted as shown in FIG. 6.

As shown in FIG. 6, in step S210, an active material for the positive electrode material of the nonaqueous lithium ion secondary battery is synthesized. Required materials are mixed into water, and the resultant is heated under reflux for a predetermined time to obtain a water-soluble active material. The suspension of thus synthesized active material for the positive electrode material is filtered and in step S220 subjected to a spray drying method.

By using the spray drying method, the active material for the positive electrode material takes the form of positive electrode material powder of fine spherical particles. The positive electrode material powder is made of water-soluble spherical particles of which the average particle diameter is within a range from 0.1 µm to 20 µm.

Without using the spray drying method, as shown in FIG. 5, the active material synthesized can be pulverized into powder of predetermined particle sizes by a ball mill, for example, and the particles can be sifted out and classified. Use of the spray drying method is advantageous in that there is no need of the pulverizing and sifting work, and the resultant particles are fine spherical particles of which the average particle diameter is in sub-micron or smaller scale. In this way, the powder of vanadium oxide, e.g., vanadium pentoxide, which has the layered crystal structure of the short layer length, is obtained.

In the heating treatment in the manufacturing method, the heating temperature must be set at lower than 250 °C. It is not preferable that the temperature exceeds 250 °C, since the layered crystal having the short layer length changes in state.

In the layered crystalline material of the present invention, it suffices that the area ratio of the crystal particles having the layered crystal state of 30 nm or shorter in layer length is preferably 30 % or higher when observed in a cross section of the layered crystalline material. For example, the area ratio of the crystal particles is preferably 30 % or higher in any cross section of the layered crystalline material.

The energy density of the lithium ion secondary battery using the layered crystalline material of the present invention is higher than that of the battery using the crystal particles having the layered crystal structure of which the layer length exceeds 30 nm. More specifically, it suffices that the fine crystal particles having the layered crystal structure of the layer length of 30 nm or shorter are 30 % or more and less than 100 % in terms of the area ratio, and the upper limit of the area ratio is effective to nearly 100 %. When the area ratio of such layered crystals is 100 %, the amorphous state is not present in the layered crystalline material and the material is only in the layered crystal state.

The minimum layer length of the layered crystal structure is preferably 1 nm or more. When the layer length of the layered crystal is shorter than 1 nm, it is impossible to sustain the layered crystal structure, and lithium ions cannot be doped to and de-doped from between the layers. In this state, it is impossible to obtain high capacity. When the layer length exceeds 30 nm, the crystal structure will collapse during the charging and discharging operation and the cycle characteristic becomes poor. Accordingly, the layer length preferably ranges from 1 nm to 30 nm, more preferably 5 nm to 25 nm,

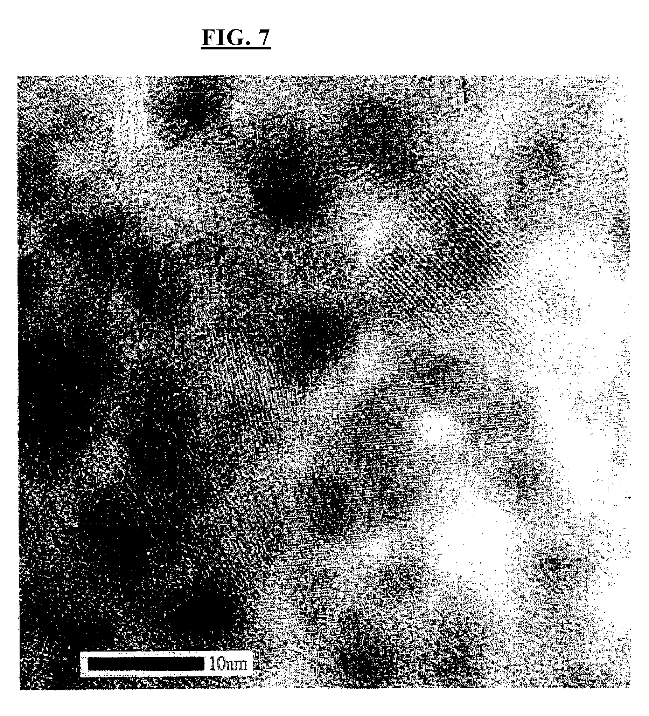

FIG. 7 is a transmission electron microscope (TEM) photograph showing a layered crystal state, of a positive electrode active material, in which the length of the layered crystal is within a range from 1 nm to 30 nm in a positive electrode. The photograph is used, for reference, in place of the drawing. The photograph of FIG. 7 shows the layered crystals of 5 nm to 25 nm in layer length in the case of lithium - vanadium pentoxide.

A nonaqueous lithium ion secondary battery is constructed using the active material mentioned above for the positive electrode. The nonaqueous lithium ion secondary battery is constructed with the positive electrode, a negative electrode and an electrolyte layer located between those electrodes.

The negative electrode can be made of a material used in the conventional nonaqueous lithium ion secondary battery. Examples of the material include a lithium metal material, e.g., metal lithium or lithium alloy (e.g., Li - Al alloy), an intermetallic compound material of metal such as tin or silicon and lithium metal, a lithium compound such as lithium nitride, or a lithium intercalation carbon material.

An example of the electrolyte is a lithium salt such as CF₃SO₃Li, C₄F₉SO₈Li, (CF₃SO₂)₂NLi, (CF₃SO₂)₃CLi, LiBF₄, LiPF₆ or LiClO₄. The solvent into which the electrolyte is dissolved is a nonaqueous solvent.

Examples of the nonaqueous solvent include a chain carbonate, a cyclic carbonate, a cyclic ester, a nitrile compound, an acid anhydride, an amide compound, a phosphate compound, and an amine compound, more specifically, ethylene carbonate (EC), diethyl carbonate (DEC), propylene carbonate, dimethoxyethane, γ- butyrolactone, n-methylpyrrolidone, N,N'-dimethylacetoamide, acetonitrile, or a mixture of propylene carbonate and dimethoxyethane or a mixture of sulfolane and tetrahydrofuran.

The electrolyte layer, which is located between the positive electrode and the negative electrode, can be a solution formed by dissolving the electrolyte into the nonaqueous solvent. It can be also a polymer gel containing such an electrolyte solution (polymer gel electrolyte).

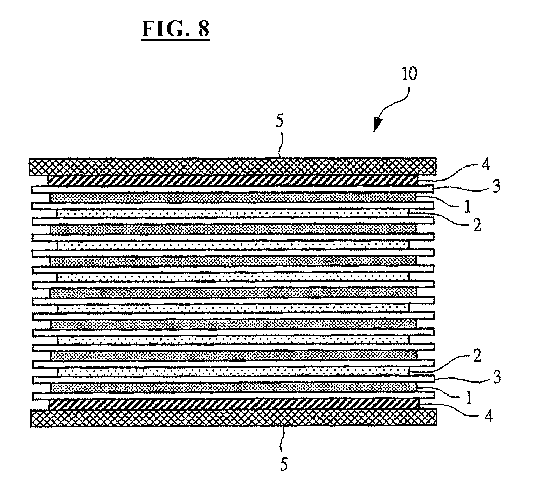

The nonaqueous lithium secondary battery can be constructed as shown in FIG. 8. To be more specific, in a nonaqueous lithium secondary battery 10, a negative electrode 1 and a positive electrode 2 face with each other with a separator 3 being interposed therebetween. The negative electrode 1 is constructed such that the negative electrode active material is layered on a surface of a substrate as a current collector. The positive electrode 2 is constructed such that the positive electrode active material is layered on a surface of a substrate as a current collector.

A plurality of the negative electrode 1 and the positive electrode 2 are laminated with the separator 3 interposed therebetween as shown in FIG. 8. In the battery constructed shown in FIG 8, the units are vertically laminated and the negative electrodes 1 are located on the top and the bottom of the lamination. A metal lithium 4 is laminated on the negative electrode 1 formed on the top and the bottom of the lamination with the separator 3 interposed therebetween.

The metal lithium 4 is covered with copper mesh 5 as current collector. Although not illustrated, the electrode group thus laminated is placed in a nonaqueous solvent into which the electrolyte is dissolved, or the separator 3 is impregnated with a nonaqueous solvent into which the electrolyte is dissolved.

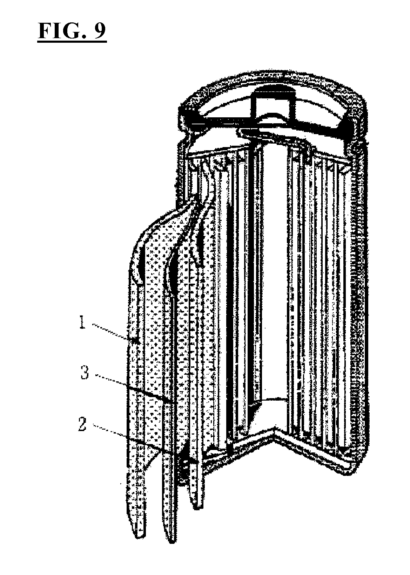

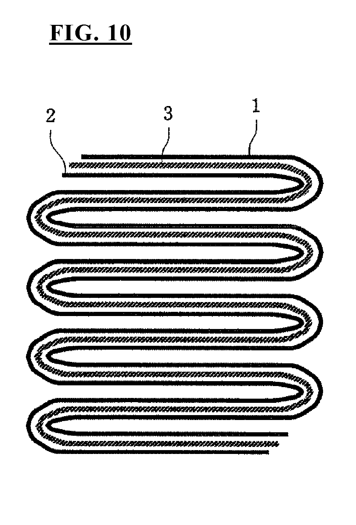

The nonaqueous lithium ion secondary battery described above can be the other lamination type. For example, it can be of a wound type or a folding type. The lithium ion secondary battery shown in FIG. 9 is of a wound type, and that shown in FIG. 10 is of a folding type.

Several moles of lithium ions, with respect to one mole of the positive electrode material, can be doped into the positive electrode material of the present invention. When the amount of the lithium ions exceeds a certain amount of ions, the de-doping capability of the positive electrode material remarkably lowers. This threshold value of the potential is 1.45 V with respect to lithium metal. If the potential lowers below the threshold value, the capacity deterioration of the battery progresses. If it is the threshold value or more, both of the charge/discharge capacity and the cycle performance is put at satisfactory high levels. The potential is preferably within a range from 1.45 V to 2 V, more preferably 1.5 V to 1.9 V.

### EXAMPLES

### Example 1

### Manufacturing of Positive Electrode Active Material:

In this example, in step S210 in FIG. 6, 5 liter of 10 % H₂O₂ was added to 50 g of V₂O₅ at room temperature. In step S220, the produced V₂O₅ sol solution of red orange color was sprayed from a four fluid nozzle at a liquid feeding rate of 12 ml/min into a dried atmosphere at a gas supply opening temperature of 225 °C and an exhaust opening temperature of 110 °C, and then was vacuum-dried at 150 °C. As a result, 45 g of powder having a red orange color was obtained.

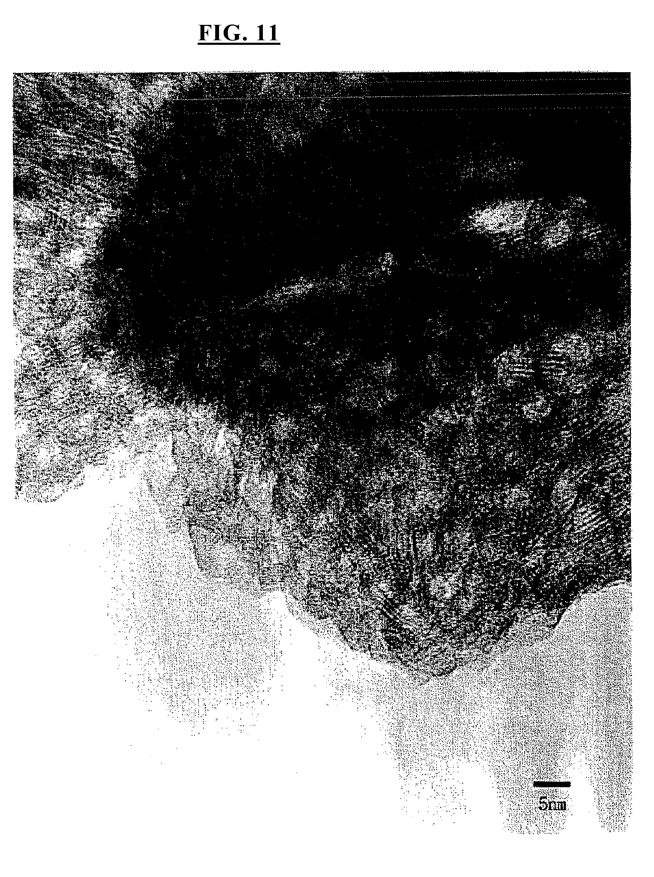

A composition of the powder was obtained by a thermo-gravimetry (TG). It was V₂O₅ 0.3 H₂O. The powder was analyzed by an X-ray diffraction (XRD) method, which used a CuKα radiation source, and a weak diffraction line diffracted at the 001 lattice plane was observed at a point near 2θ = 7°. The powder was observed by a scanning electron microscope (SEM), and spherical particles were recognized. A particle size distribution was measured by a laser diffraction scattering method, and the measurement result was: D90 = 10 µm. In the TEM analysis, it was observed that as shown in FIG. 11, fine layered crystal particles having a layer length ranging from 5 to 10 nm were arranged in random directions. A ratio of the layered crystal particles per unit area in an observation visual field of the TEM image was estimated to be 100 %.

### Manufacturing of Positive Electrode:

The positive electrode active material, carbon black as a conductive assistant, and a polyvinylidene fluoride (PVDF) as a binder were mixed at a weight ratio of 90:5:5, and then suspended to n-methyl pyrrolidone (NMP) to obtain a slurry. The slurry was uniformly coated over both sides of an aluminum current collector (substrate) having through holes. The resultant current collector was dried under reduced pressure at 150 °C and pressed to obtain a positive electrode having a thickness of 249 µm.

### Manufacturing of Negative Electrode:

Natural graphite, commercially available, of which the surface had been inactivated, and PVDF as a binder were mixed at a weight ratio of 94:6, and the resultant was suspended to NMP to obtain a slurry. The slurry was uniformly coated over one or both sides of a copper current collector having through holes, to thereby obtain a both-side negative electrode having a thickness of 239 µm and a single-side negative electrode having a thickness of 127 µm.

### Manufacturing of Battery:

The positive electrode thus manufactured was cut to have a size of 92 mm x 76 mm, and the negative electrode was cut to have a size of 96 mm x 79 mm. 16 sheets of the positive electrodes and 17 sheets of the negative electrodes (including two sheets of the negative electrodes of the single-side coating type) were laminated in a state that polyolefin fine porous films as separators were each interposed between the adjacent electrodes. Then, an aluminum terminal was welded at an uncoated part of the positive electrode and a Ni terminal was welded at an uncoated part of the negative electrode. In this way, an electrode laminated unit was fabricated.

Lithium metal sheets each having a thickness of 500 µm pressed on the negative electrode current collectors placed at the upper and lower outermost parts of the electrode laminated unit in a state that a separator is interposed therebetween to form an electrode group including the positive electrodes, the negative electrodes, the metal lithium sheets, and the separators. The metal lithium current collector and the negative electrode current collector were welded together.

An electrolyte having 1 mol/l lithium tetrafluoroborate (LiBF₄) dissolved in a mixed solvent of ethylene carbonate : diethyl carbonate =1:3 in terms of weight ratio was injected into the electrode laminated unit. Subsequently, a part located near the electrode group to which the metal lithium was pressed was fixed to a Ni wire, and was used as a reference electrode for monitoring the potentials of the positive electrode and the negative electrode. Opening parts were sealed by thermal fusion. Two battery cells were manufactured.

### Lithium Ion Doping Step:

After the battery cells were left to stand for 20 days, one cell was disassembled. It was confirmed that no metal lithium remained in the disassembled cell. From this fact, it was considered that a predetermined amount of lithium ions was pre-doped into the negative electrode.

### Charge/Discharge Test:

The remaining battery cell was subjected to a charge/discharge cycle test. A constant current/constant voltage (CC-CV) charging method in conditions of 0.1 C and 4.1 V was employed and the charging operation ended after 30 hours. A constant current (CC) discharging method in condition of 0.05 C was employed and the discharging operation ended after the voltage reached 0 V. After the cell had been charged and discharged three times under the above conditions, the operation potentials of the positive electrode and the negative electrode were measured with the reference electrode. The potentials of both the electrodes were each 1.5 V with respect to metal lithium.

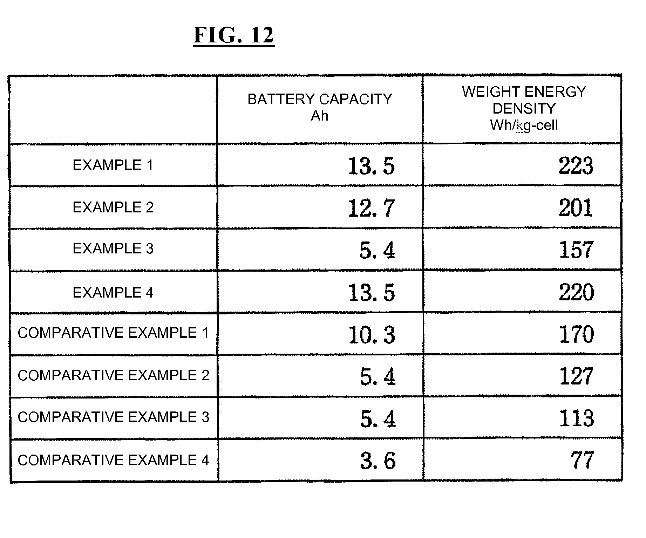

At this time, the discharge capacity obtained was 13.5 Ah. The discharge capacity was converted into a value per weight of the cell (weight energy density) by dividing the discharge capacity by the weight of the cell, exclusive of the reference electrode, and the result was 223 Wh/kg-cell as shown in FIG. 12.

### Example 2

In this example, positive electrodes and negative electrodes were manufactured as in Example 1. The thickness of each of the lithium metal sheets that were pressed on a negative electrode current collector, which were placed at the upper and lower outermost parts of the electrode laminated unit, was changed to 490 µm. Two battery cells were fabricated as in Example 1. After the battery cells were left to stand for 20 days, one cell was disassembled. It was confirmed that no metal lithium remained. From this fact, it was considered that a predetermined amount of lithium ions was pre-doped into the negative electrode.

The remaining battery cell was subjected to a charge/discharge cycle test. A constant current/constant voltage (CC-CV) charging method in conditions of 0.1 C and 4.1 V was employed and the charging operation ended after 30 hours. A constant current (CC) discharging method in condition of 0.05 C was employed and the discharging operation ended after the voltage reached 0 V.

After the cell had been charged and discharged three times under the above conditions, the operation potentials of the positive electrode and the negative electrode were measured with the reference electrode. The potentials of both the electrodes were each 2.0 V based with respect to metal lithium. At this time, the discharge capacity obtained was 12.7 Ah. The discharge capacity was converted into the value per weight of the cell (weight energy density) by dividing the discharge capacity by the weight of the cell, exclusive of the reference electrode, and the result was 201 Wh/kg-cell as shown in FIG. 12.

### Example 3

This example was constructed as in Example 1 except the positive electrode, the negative electrode, and the thickness of each metal lithium sheet.

### Manufacturing of Positive Electrode:

Commercially available LiCoO₂, graphite as a conductive assistant, and a polyvinylidene fluoride (PVDF) as a binder were mixed ata weight ratio of 91:5:4, and then suspended to n-methyl pyrrolidone (NMP) to obtain a slurry. The slurry was uniformly coated over both sides of an aluminum current collector having through holes. The resultant current collector was dried under reduced pressure at 150°C and pressed to obtain a positive electrode having a thickness of 183 µm.

### Manufacturing of Negative Electrode:

Natural graphite, commercially available, of which the surface had been inactivated, and PVDF as a binder were mixed at a weight ratio of 94:6, and the resultant was suspended to NMP to obtain a slurry. The slurry was uniformly coated over one or both sides of a copper current collector having through holes to obtain a both-side negative electrode having a thickness of 239 µm and a single-side negative electrode having a thickness of 127 µm.

### Manufacturing of Battery:

A lithium ion secondary battery was manufactured by using the positive electrode and the negative electrode. Two battery cells were manufactured as in Example 1 except that the thickness of each of the lithium metal sheets, which were placed at the upper and lower outermost parts of the electrode laminated unit, was changed to 85 µm. After the battery cells were left to stand for 20 days, one cell was disassembled. It was confirmed that no metal lithium remained. From this fact, it was considered that a predetermined amount of lithium ions was pre-doped into the negative electrode.

The remaining battery cell was subjected to a charge/discharge cycle test. A constant current/constant voltage (CC-CV) charging method in conditions of 0.1 C and 4.1 V was employed and the charging operation ended after 30 hours. A constant current (CC) discharging method in condition of 0.05 C was employed and the discharging operation ended after the voltage reached 3.0 V.

After the cell had been charged and discharged three times under the above conditions, the discharge capacity obtained was 5.4 Ah as shown in FIG. 12. The discharge capacity was converted into the value per weight of the cell (weight energy density) by dividing the discharge capacity by the weight of the cell, exclusive of the reference electrode, and the result was 157 Wh/kg-cell.

When the cell was discharged to 0 V, the operation potentials of the positive electrode and the negative electrode were measured with the reference electrode. The potentials of both the electrodes were each 0.5 V with respect to metal lithium.

### Example 4

### Manufacturing of Positive Electrode Active Material:

In this example, 200 g of vanadium pentoxide, 30 g of lithium sulfide (Li₂S), and 100 g of 3,4-ethylene dioxythiophene (EDOT) were suspended in 5 liters of water, and the resultant suspension was heated and stirred under reflux for 24 hours. After the stirring ended, the resultant was sucked and filtered to remove the solid content therefrom. The removed solid content was sulfur and a polymer of 3,4-ethylene dioxythiophene.

The filtrate was concentrated under reduced pressure in conditions of 75 °C and 10.67 kPa (80 Torr), and water and organic material were removed from the resulting filtrate to obtain a black solid. The thus obtained product was vacuum-dried at 100 °C. In the TEM analysis shown in FIG. 7, it was observed that fine layered crystal particles having a layer lengths ranging from 5 nm to 25 nm were arranged in random directions. A ratio of the layered crystal particles per unit area with respect to a macroscopic amorphous part in an observation visual field of the TEM image was estimated to be 100 %.

### Manufacturing of Positive Electrode:

A positive electrode paste having the same composition as in Example 1 was prepared. The paste was uniformly coated over both sides of an aluminum current collector (substrate) having through holes to obtain a positive electrode having a thickness of 175 µm.

### Manufacturing of Battery:

An electrode group was formed by using 16 sheets of positive electrodes, 17 sheets of negative electrodes and separators in the same manner as in Example 1 to fabricate an electrode laminated unit, except that the positive electrodes were fabricated according to this example and the negative electrodes were those fabricated according to Example 1.

### Lithium Ion Doping Step:

After the battery cells thus manufactured were left to stand for 20 days, one cell was disassembled. It was confirmed that no metal lithium remained. From this fact, it was considered that a predetermined amount of lithium ions was pre-doped into the negative electrode.

### Charge/Discharge Test:

The remaining battery cell was subjected to a charge/discharge cycle test. A constant current/constant voltage (CC-CV) charging method in conditions of 0.1 C and 4.1 V was employed and the charging operation ended after 30 hours. A constant current (CC) discharging method in condition of 0.05 C was employed and the discharging operation ended after the voltage reached 0 V.

After the cell had been charged and discharged three times under the above conditions, the operation potentials of the positive electrode and the negative electrode were measured with the reference electrode. The potentials of both the electrodes were each 1.5 V. At this time the discharge capacity obtained was 13.5 Ah as shown in FIG. 12.

The discharge capacity was converted into the value per weight of the cell (weight energy density) by dividing the discharge capacity by the weight of the cell, exclusive of the reference electrode, and the result was 220 Wh/kg-cell.

### Comparative Example 1

Two battery cells were manufactured as in Example 1 except the thickness of each of the lithium metal sheets, which were placed at the upper and lower outermost parts of the electrode laminated unit, was changed to 420 µm. After the battery cells were left to stand for 20 days, one cell was disassembled. It was confirmed that no metal lithium remained. From this fact, it was considered that a predetermined amount of lithium ions was pre-doped into the negative electrode.

The remaining battery cell was subjected to a charge/discharge cycle test. A constant current/constant voltage (CC-CV) charging method in conditions of 0.1 C and 4.1 V was employed and the charging operation ended after 30 hours. A constant current (CC) discharging method in condition of 0.05 C was employed and the discharging operation ended after the voltage reached 0 V.

After the cell had been charged and discharged three times under the above conditions, the operation potentials of the positive electrode and the negative electrode were measured with the reference electrode. The potentials of both the electrodes were each 2.1 V with respect to metal lithium. At this time, the discharge capacity obtained was 10.3 Ah as shown in FIG. 12.

The discharge capacity was converted into the value per weight of the cell (weight energy density) by dividing the discharge capacity the weight of the cell, exclusive of the reference electrode, and the result was 170 Wh/kg-cell.

### Comparative Example 2

In Comparative Example 2, a battery was manufactured by using the positive electrode according to Example 2 and the negative electrode according to Example 1. Two battery cells were manufactured as in Example 1 except the thickness of each of the lithium metal sheets, which were placed at the upper and lower outermost parts of the electrode laminated unit, was changed to 350 µm.

After the battery cells were left to stand for 20 days, one cell was disassembled. It was confirmed that no metal lithium remained. From this fact, it was considered that a predetermined amount of lithium ions was pre-doped into the negative electrode.

The remaining battery cell was subjected to a charge/discharge cycle test. A constant current/constant voltage (CC-CV) charging method in conditions of 0.1 C and 4.2 V was employed and the charging operation ended after 30 hours. A constant current (CC) discharging method in condition of 0.05 C was employed and the discharging operation ended after the voltage reached 3.0 V.

After the charge/discharge operation had been repeated three times under the above conditions, the discharge capacity obtained was 5.4 Ah as shown in FIG. 12. The discharge capacity was converted into the value per weight of the cell (weight energy density) by dividing the discharge capacity by the weight of the cell, exclusive of the reference electrode, and the result was 127 Wh/kg-cell. The operation potentials of the positive electrode and the negative electrode when the cell was discharged to 0 V were obtained on the basis of the reference electrode. The potentials of both the electrodes were each 0.3 V based on the metal lithium.

### Comparative Example 3

In this Comparative Example 3, two battery cells were manufactured as in Comparative Example 2, except that the thickness or each of the lithium metal sheets, which were placed at the upper and lower outermost parts of the electrode laminated unit, was changed to 140 µm. After the battery cells were left to stand for 20 days, one cell was disassembled. It was confirmed that no metal lithium remained. From this fact, it was considered that a predetermined amount of lithium ions was pre-doped into the negative electrode.

The remaining battery cell was subjected to a charge/discharge cycle test. A constant current/constant voltage (CC-CV) charging method in conditions of 0.1 C and 4.1 V was employed and the charging operation ended after 30 hours. A constant current (CC) discharging method in condition of 0.05 C was employed and the discharging operation ended after the voltage reached 0 V.

After the charge/discharge operation had been repeated three times under the above conditions, the discharge capacity obtained was 5.4 Ah as shown in FIG. 12. The discharge capacity was converted into the value per weight of the cell (weight energy density) by dividing the discharge capacity by the weight of the cell, exclusive of the reference electrode, and the result was 128 Wh/kg-cell.

The operation potentials of the positive electrode and the negative electrode when the cell was discharged to 0 V were obtained on the basis of the reference electrode. The potentials of both the electrodes were each 0.4 V with respect to metal lithium.

### Comparative Example 4

In this Comparative Example 4, one battery cell was manufactured as in Comparative Example 2, except that the lithium metal sheets were not placed on the outermost parts of the electrode laminated unit.

The manufactured battery cell was subjected to a charge/discharge cycle test. A constant current/constant voltage (CC-CV) charging method in conditions of 0.1 C and 4.1 V was employed and the charging operation ended after 30 hours. A constant current (CC) discharging method in condition of 0.05 C was employed and the discharging operation ended after the voltage reached 3.0 V.

After the charge/discharge operation had been repeated three times under the above conditions, the discharge capacity obtained was 3.6 Ah as shown in FIG. 12. The discharge capacity was converted into the value per weight of the cell (weight energy density) by dividing the discharge capacity by the weight of the cell, exclusive of the reference electrode, and the result was 87 Wh/kg-cell.

The operation potentials of the positive electrode and the negative electrode when the cell was discharged to 0 V were obtained on the basis of the reference electrode. The potentials of both the electrodes were each 3.6 V with respect to metal lithium.

It was confirmed from the results of Comparative Examples 1 to 4 that when the operation potentials of the nonaqueous lithium ion secondary batteries measured after the short-circuiting were below 0.5 V, such as 0.4 V or 0.3 V, which was measured with respect to metal lithium, the energy densities of the batteries were low, and that when the operation potentials exceeded 2.0 V, such as 2.1 V or 3.6 V, the energy densities decreased. It was also confirmed from Examples 1 to 4 that when the operation potentials were within a range from 0.5 V to 2.0 V, such as 0.5 V, 1.5 V or 2.0 V, the energy densities were in satisfactory levels.

The energy density in Example 3 is lower than that in each of the other examples, but is higher than that in each of Comparative Examples 2 to 4, which uses the positive electrode of Example 2.

It will be seen that when the potential of the positive electrode when the cell is discharged to 0 V exceeds 2.0 V (vs. Li/Li⁺), the utilized capacity of the positive electrode material is insufficient, and that when it is below 0.5 V, the utilized capacity of the positive electrode material is sufficient, but the utilized capacity of the negative electrode material is insufficient.

From the results of Examples 1 to 4, it will be seen that when the potential of the positive electrode when the cell is discharged to 0 V is within a range from 0.5 V to 2.0 V (vs. Li/Li⁺), both the positive electrode and the negative electrode have sufficient utilized capacities, and the energy density is high.

From comparison of the results of Examples 1, 2 and 4 with that of Example 3, it is seen that the energy density is high when the vanadium pentoxide, in which fine layered crystal particles having a layer length ranging from 5 nm to 25 nm, more widely 1 nm to 30 nm are randomly aggregated, is used for the positive electrode active material.

While the present invention has been described using the embodiment and some specific examples, it should be understood that the present invention is not limited to those, but may variously be modified, altered and changed within the true spirits of the present invention.

In the battery configuration of the present invention, the graphite material is used for the negative electrode, but is not limited thereto. Any other material may be used to obtain similar effects as long as it is a negative active material allowing lithium ions to be doped. Specific examples of such a material include tin based alloy and silicon based alloy.

The present invention can be effectively utilized, in particular, in the field of positive electrode materials for large-capacity lithium secondary batteries.

## Claims

1. A lithium ion secondary battery having a positive electrode, a negative electrode and an electrolyte containing a lithium salt and an aprotic organic solvent, in which a positive electrode active material is a metal oxide or an organic compound exhibiting redox activity, a negative electrode active material is a material allowing lithium ions to be reversibly doped thereinto, wherein potentials of the positive electrode and the negative electrode after the positive electrode and the negative electrode have been short-circuited are each selected to be within a range from 0.5 V to 2.0 V (vs. Li/Li+) with respect to metal lithium.

2. The lithium ion secondary battery according to claim 1, wherein the positive electrode active material is a layered crystalline material and the layered crystalline material is a vanadium oxide containing fine crystal particles having a layer length of 30 nm or shorter, exclusive of 0 nm.

3. The lithium ion secondary battery according to claim 2, wherein an area ratio of the fine crystal particles is within a range from 30 % to 100 % when observed in a cross section of the layered crystalline material.

4. The lithium ion secondary battery according to any of claims 1 to 3, wherein the negative electrode active material is soft carbon material, graphite or a mixture of soft carbon material and graphite.

5. The lithium ion secondary battery according to any of claims 1 to 4, wherein the positive electrode and the negative electrode are alternately laminated with a separator interposed therebetween, and wherein the laminated electrodes are wound or folded, or at least three layers in total of the positive electrode and the negative electrode are laminated.

6. The lithium ion secondary battery according to any of claims 1 to 5, wherein through holes are formed passing through a positive electrode current collector and a negative electrode current collector, and lithium ions have been doped into the negative electrode and/or the positive electrode.
